# EUROPÄISCHE PATENTANMELDUNG

(11) **EP 2 295 892 A1**
(43) Veröffentlichungstag der Anmeldung: **16.03.2011**
(21) Anmeldenummer: 09169889.4
(22) Anmeldetag: 10.09.2009
(51) Int. Cl.: F24J 2/40, G01R 31/26

(54) **Verfahren und Vorrichtung zum Ermitteln einer unter aktuellen Einstrahlungsbedingungen möglichen Einspeiseleistung**

(71) Anmelder: SMA Solar Technology AG, 34266 Niestetal (DE)
(72) Erfinder: Börger, Dipl.-Ing. Stefan, 34130, Kassel (DE)
(74) Vertreter: Rehberg Hüppe + Partner

(57) **Zusammenfassung**

Zum Ermitteln der unter aktuellen Einstrahlungsbedingungen möglichen Einspeiseleistung einer Photovoltaikanlage (2) wird ein Einstrahlungssignal (10) eines Einstrahlungssensor immer dann, wenn die Photovoltaikanlage ohne Leistungsbegrenzung einspeist, unter Verwendung von zugehörigen Messwerten der ohne Leistungsbegrenzung von der Photovoltaikanlage (2) tatsächlich eingespeisten Einspeiseleistung (11) auf die mögliche Einspeiseleistung kalibriert, werden die aktuellen Einstrahlungsbedingungen mit dem Einstrahlungssensor (9) erfasst und wird die mögliche Einspeiseleistung für einen Zeitraum, in dem die Photovoltaikanlage (2) aufgrund externer Anweisung (5) nur eine geringere Einspeiseleistung (11) als die unter den aktuellen Einstrahlungsbedingungen mögliche Einspeiseleistung einspeist, aus dem kalibrierten Einstrahlungssignal (10) bestimmt.

## Beschreibung

Die Erfindung bezieht sich auf ein Verfahren zur Ermittlung der unter aktuellen Einstrahlungsbedingungen möglichen Einspeiseleistung einer Photovoltaikanlage mit den Schritten des Oberbegriffs des unabhängigen Patentanspruchs 1 sowie auf eine Vorrichtung zum Ermitteln der unter aktuellen Einstrahlungsbedingungen möglichen Einspeiseleistung einer Photovoltaikanlage mit den Merkmalen des Oberbegriffs des unabhängigen Patentanspruchs 8.

Die unter den aktuellen Einstrahlungsbedingungen mögliche Einspeiseleistung einer Photovoltaikanlage ist als Vergleichswert für die von der Photovoltaikanlage tatsächlich eingespeiste Einspeiseleistung von Interesse. Dabei kann, soweit die Photovoltaikanlage im Normalbetrieb läuft oder zumindest laufen sollte, dieser Vergleich zur Überwachung der fehlerfreien Funktion der Photovoltaikanlage verwendet werden. Von besonderem Interesse ist die unter den aktuellen Einstrahlungsbedingungen mögliche Einspeiseleistung aber vor dem Hintergrund des deutschen Energieeinspeisegesetzes (EEG) von 2009, nach dem es möglich sein muss, Photovoltaikanlagen mit einer Anschlussleistung von über 100 kW auf Anforderungen des jeweiligen Netzbetreibers in ihrer Einspeiseleistung zu drosseln, um die Netzstabilität zu gewährleisten. Dabei steht zwar dem Betreiber der jeweiligen Photovoltaikanlage auch für die Differenz an tatsächlich nicht eingespeister elektrischer Leistung, deren Einspeisung jedoch möglich gewesen wäre, eine Vergütung zu. Zur Erlangung der Vergütung muss diese Differenz aber in nachprüfbarer Weise bestimmt werden. Dafür bedarf es neben der sowieso erfolgenden Ermittlung der von der Photovoltaikanlage tatsächlich eingespeisten Einspeiseleistung einer nachvollziehbaren Ermittlung der unter den aktuellen Einstrahlungsbedingungen möglich gewesenen Einspeiseleistung.

### STAND DER TECHNIK

Es ist bekannt, zwischen den Solarmodulen einer Photovoltaikanlage einen oder mehrere Einstrahlungssensoren anzuordnen, um die aktuellen Einstrahlungsbedingungen unabhängig von den Leistungsdaten der Photovoltaikanlage zu erfassen. Diese Einstrahlungssensoren werden üblicherweise auf die eingestrahlte Lichtenergie in einem bestimmten Wellenlängenbereich kalibriert, in dem die jeweilige Photovoltaikanlage arbeitet. Aus dem derart kalibrierten Einstrahlungssignal eines Einstrahlungssensors kann unter Berücksichtigung des Wirkungsgrads der Photovoltaikanlage auf den unter den erfassten aktuellen Einstrahlungsbedingungen mögliche Einspeiseleistung der Photovoltaikanlage geschlossen werden. Diese Rückschlüsse sind unter verschiedenen Betriebsbedingungen einer Photovoltaikanlage aber nur dann mit einer zumindest gewissen Genauigkeit möglich, wenn der Einstrahlungssensor grundsätzlich dieselben Eigenschaften wie die Solarmodule der Photovoltaikanlage aufweist, weil sein Einstrahlungssignal ansonsten anders als die mögliche Einspeiseleistung der Photovoltaikanlage mit den verschiedenen Betriebsbedingungen variiert. Damit sind bei dieser Vorgehensweise für Photovoltaikanlagen mit unterschiedlichen Solarmodulen unterschiedliche Einstrahlungssensoren notwendig, und jedwede geeigneten Einstrahlungssensoren sind wegen des notwendigerweise gleichen Aufbaus wie die Solarmodule der Photovoltaikanlage kostspielig. Auch das Kalibrieren der Einstrahlungssensoren ist mit Aufwand und entsprechenden Kosten verbunden.

Aus der EP 1 223 431 A2 ist eine Vorrichtung zur Fehlerfeststellung bei einer Photovoltaikanlage mit einem photoelektrischen Einstrahlungssensor bekannt. Hier wird zu verschiedenen Zeitpunkten ein Quotient aus dem Einstrahlungssignal des Einstrahlungssensors und der von der Photovoltaikanlage eingespeisten Leistung gebildet. Diese Quotienten werden in einer Lernphase der Vorrichtung für die jeweilige Tageszeit ermittelt und abgelegt sowie über mehrere Tage gemittelt. In einer anschließenden Betriebsphase werden die aktuell ermittelten Quotienten mit dem für diese gleiche Tageszeit abgelegten Werten verglichen. Bei einer Abweichung eines aktuellen Quotienten von dem abgelegten Wert oberhalb eines Grenzwerts wird eine Fehlermeldung ausgegeben.

Aus der DE 201 02 619 U1 sind ein Verfahren mit den Schritten des Oberbegriffs des unabhängigen Patentanspruchs 1 und eine Vorrichtung mit den Merkmalen des Oberbegriffs des unabhängigen Patentanspruchs 8 bekannt. Hier ist ein Einstrahlungssensor in Form einer Photozelle vorgesehen, die in gleicher Ausrichtung zur Sonne wie die Photovoltaikflächen der Solarmodule einer Photovoltaikanlage platziert wird und deren Einstrahlungssignal an eine Auswerteeinheit übertragen wird. Dieses Einstrahlungssignal soll den Sollwert für die Einspeiseleistung der Photovoltaikanlage unter den aktuellen Einstrahlungsbedingungen als zu dem jeweiligen Zeitpunkt maximal möglichen Wert vorgeben. Dabei wird eine Sollkurve unter optimaler Sonneneinstrahlung und optimalem Betrieb der Photovoltaikanlage und aller nachgeschalteten Anlagenteile durch Registrieren der von der Photovoltaikanlage zu diskreten Zeitpunkten tatsächlich eingespeisten Einspeiseleistung gelernt. Im Betrieb wird dann diese Sollkurve zur Überwachung der gesamten Photovoltaikanlage bis zum Einspeisezähler verwendet. Beim Auftreten einer Abweichung der tatsächlich eingespeisten Einspeiseleistung von der einmal gelernten Sollkurve wird Alarm gegeben. Auf diese Weise können zwar für jede individuelle Photovoltaikanlage die ortsspezifischen Gegebenheiten bei der Abschätzung der möglichen Einspeiseleistung berücksichtigt werden. Zur Bestimmung der zu irgendeinem späteren Zeitpunkt möglichen Einspeiseleistung der jeweiligen Photovoltaikanlage, zu dem möglicherweise keine optimale Sonneneinstrahlung vorliegt und die Photovoltaikanlage sowie die nachgeschalteten Anlagenteile nicht optimal arbeiten, um hieraus beispielsweise eine Vergütung für tatsächlich nicht eingespeiste Einspeiseleistung zu verlangen, sind das bekannte Verfahren und die bekannte Vorrichtung jedoch nicht genau genug.

### AUFGABE DER ERFINDUNG

Der Erfindung liegt die Aufgabe zugrunde, ein Verfahren mit den Schritten des Oberbegriffs des unabhängigen Patentanspruchs 1 und eine Vorrichtung mit den Merkmalen des Oberbegriffs des unabhängigen Patentanspruchs 8 aufzuzeigen, die es mit geringem Aufwand erlauben, die unter aktuellen Einstrahlungsbedingungen mögliche Einspeiseleistung einer Photovoltaikanlage mit hoher Genauigkeit zu bestimmen, so dass insbesondere die bei verordneter Reduzierung der Einspeiseleistung möglich gewesenen aber nicht eingespeisten Leistungen z. B. für die Berechnung ihrer Vergütung genau dokumentiert werden können.

### LÖSUNG

Erfindungsgemäß wird diese Aufgabe durch ein Verfahren mit den Schritten des unabhängigen Patentanspruchs 1 und eine Vorrichtung mit den Merkmalen des unabhängigen Patentanspruchs 8 gelöst. Bevorzugte Ausführungsformen des neuen Verfahrens und der neuen Vorrichtung sind in den abhängigen Patentansprüchen beschrieben.

### BESCHREIBUNG DER ERFINDUNG

Bei der vorliegenden Erfindung erfolgt nicht nur eine einmalige Kalibrierung des Einstrahlungssignals des Einstrahlungssensors auf die mögliche Einspeiseleistung unter optimalen Bedingungen, sondern das Einstrahlungssignal wird fortlaufend unter den realen und damit auch unter möglicherweise suboptimalen Betriebsbedingungen der Photovoltaikanlage unter Verwendung der zugehörigen Messwerte der tatsächlich eingespeisten Einspeiseleistung nachkalibriert und zwar immer dann, wenn die Photovoltaikanlage ohne Leistungsbegrenzung einspeist. Damit steht zwar dieses fortlaufend nachkalibrierte Einstrahlungssignal des Einstrahlungssensors für die Funktionsüberwachung der Photovoltaikanlage nicht zur Verfügung, weil es auch an eine eingeschränkte Leistungsfähigkeit der Photovoltaikanlage sofort angepasst wird. Auf diese Weise gibt dieses fortlaufend kalibrierte Einstrahlungssignal aber die mögliche Einspeiseleistung der Photovoltaikanlage in einem angrenzenden Zeitraum, in dem die Photovoltaikanlage an der Einspeisung dieser maximal möglichen Einspeiseleistung, beispielsweise aufgrund eines Einspeiseleistungsbegrenzungssignals von einem Netzbetreiber gehindert wird, mit maximal möglicher Genauigkeit wieder.

Die Kalibrierung des Einstrahlungssignals kann für einen Zeitraum, in dem die Photovoltaikanlage aufgrund externer Anweisung nur eine reduzierte Einspeiseleistung einspeist, unter Verwendung von zugehörigen Messwerten der ohne Leistungsbegrenzung von der Photovoltaikanlage in einem angrenzenden früheren Zeitraum und/oder in einem angrenzenden späteren Zeitraum tatsächlich eingespeisten Einspeiseleistung kalibriert werden. Die Kalibrierung für den Zeitraum, in dem die Photovoltaikanlage aufgrund externer Anweisung nur eine reduzierte Einspeiseleistung einspeist, kann auch zwischen den für die angrenzenden Zeiträume ermittelten Kalibrierungen interpoliert oder auf die Kalibrierung für den jeweils zeitlich näher liegenden Bereich festgelegt werden. Es ist weiterhin möglich, die Kalibrierungen auf Basis der angrenzenden Zeiträume zu vergleichen und nur dann eine valide Kalibrierung für den dazwischen liegenden Zeitraum zu bestimmen, wenn die beiden Kalibrierungen für die angrenzenden Zeiträume innerhalb eines vorgegebenen Toleranzfensters übereinstimmen.

Wenn die Zeiträume, in denen die Photovoltaikanlage aufgrund externer Anweisung nur eine reduzierte Einspeiseleistung einspeist, vergleichsweise kurz bleiben, kann es ausreichend sein, das Einstrahlungssignal des Einstrahlungssensors ausschließlich unter Verwendung der in den angrenzenden Zeiträumen tatsächlich eingespeisten Einspeiseleistung durch einfache Bildung eines Kalibrierungsquotienten auf die mögliche Einspeiseleistung zu kalibrieren. Vielfach kann es aber notwendig sein, bei der Kalibrierung des Einstrahlungssignals weitere Abhängigkeiten der Einspeiseleistung zu berücksichtigen, beispielsweise in Form der absoluten Einstrahlung, um eine Kennlinie der Einspeiseleistung über dem Einsstrahlungssignal zu etablieren, und/oder der Temperatur im Bereich der Solarmodule der Photovoltaikanlage und des Einstrahlungssensors und/oder der Tageszeit und/oder der Jahreszeit, die den Sonnenstand bzw. den Einstrahlungswinkel bestimmen.

Insbesondere wenn eine derartige Mehrfachabhängigkeit des Einstrahlungssignals bei der Kalibrierung berücksichtigt wird, ist es vorteilhaft, wenn die Kalibrierung des Einstrahlungssignals in einer ggf. mehrdimensionalen Tabelle definiert wird, die fortlaufend aktualisiert wird und aus der für einen Zeitraum, in dem die Photovoltaikanlage aufgrund externer Ansteuerung nur eine reduzierte Einspeiseleistung einspeist, der jeweils passende Wert ggf. unter Interpolation von Werten zu benachbarten Einstrahlungssignalen entnommen werden kann. Es versteht sich jedoch, dass die Tabelle möglichst nicht so groß, d. h. in sovielen Dimensionen und mit einem so geringen Abstand der Einträge in den einzelnen Dimensionen angelegt werden sollte, dass die einzelnen Einträge nur sehr selten eine Aktualisierung erfahren. Vielmehr ist es bei der vorliegenden Erfindung bevorzugt, wenn die Tabelle für die Kalibrierung des Einstrahlungssignals kompakt, dafür aber in allen Einträgen aktuell gehalten wird.

Es versteht sich, dass der Einstrahlungssensor die Einstrahlungsbedingungen an einem für die Solarmodule der Photovoltaikanlage repräsentativen Ort erfassen sollte. Dazu ist er mit möglichst gleicher Orientierung vor oder zwischen den Solarmodulen der Photovoltaikanlage anzuordnen.

Um die Abhängigkeit des Einstrahlungssignals von der spektralen Verteilung oder dem Winkel der Einstrahlung aufzulösen, kann der Einstrahlungssensor bei der vorliegenden Erfindung auch mehrere Teilsensoren mit unterschiedlicher spektraler Empfindlichkeit und/oder unterschiedlicher Ausrichtung aufweisen, die jeweils einen Beitrag zu dem Einstrahlungssignal liefern. Die Erfindung kommt aber in der Regel mit einem einzigen Einstrahlungssensor aus.

Bei der vorliegenden Erfindung kommt es aber nicht darauf an, dass der Einstrahlungssensor grundsätzlich dieselben Eigenschaften wie die Solarmodule der Photovoltaikanlage aufweist. Unterschiede in den Eigenschaften werden durch die fortlaufende Kalibrierung des Einstrahlungssignals des Einstrahlungssensors kompensiert. Dies gilt auch und insbesondere für unterschiedliche Auswirkungen einer Alterung auf das Einstrahlungssignal des Einstrahlungssensors und die Einspeiseleistung der Solarmodule. So kann der Einstrahlungssensor problemlos auf einem anderen Material als dem Material der Solarmodule der Photovoltaikanlage basieren.

Im Rahmen der Erfindung kann dann, wenn die Photovoltaikanlage auf externe Anforderung eine geringer Einspeiseleistung als die unter aktuellen Einstrahlungsbedingungen mögliche Einspeiseleistung einspeist, die unter den aktuellen Einstrahlungsbedingungen möglich gewesene zusätzliche Einspeiseleistung dokumentiert werden. Dabei kann die Dokumentation direkt das Integral der unter den aktuellen Einstrahlungsbedingungen möglich gewesenen zusätzlichen Einspeiseleistung und/oder die zu dessen Berechnung erforderlichen Rohdaten abdecken. Was genau dokumentiert wirdt, ist mit demjenigen abzustimmen, der die möglich gewesene zusätzliche Einspeiseleistung vergüten muss. Im Rahmen der nachvollziehbaren Dokumentation der möglich gewesenen zusätzlichen Einspeiseleistung kann auch vorgesehen werden, das Einstrahlungssignal des Einstrahlungssensors fortlaufend und fälschungs- sowie ausfallsicher in einem Datenlogger abzulegen.

An dieser Stelle sei darauf hingewiesen, dass im Zusammenhang der vorliegenden Erfindung mit der Formulierung "Die unter den aktuellen Einstrahlungsbedingungen mögliche Einspeiseleistung der Photovoltaikanlage" hier immer nur die real mögliche Einspeiseleistung gemeint ist, d. h. die unter den tatsächlichen Betriebsbedingungen der Photovoltaikanlage mögliche, auch wenn diese Betriebsbedingungen suboptimal sind. Es geht nicht um die unter den aktuellen Einstrahlungsbedingungen maximal mögliche Einspeiseleistung der Photovoltaikanlage, die optimale Betriebsbedingungen der Photovoltaikanlage voraussetzt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand eines Ausführungsbeispiels unter Bezugnahme auf die beigefügten Zeichnungen näher erläutert und beschrieben.
- **Fig. 1**: zeigt den prinzipiellen Aufbau einer erfindungsgemäßen Vorrichtung; und
- **Fig. 2**: skizziert den prinzipiellen Ablauf eines erfindungsgemäßen Verfahrens.

### FIGURENBESCHREIBUNG

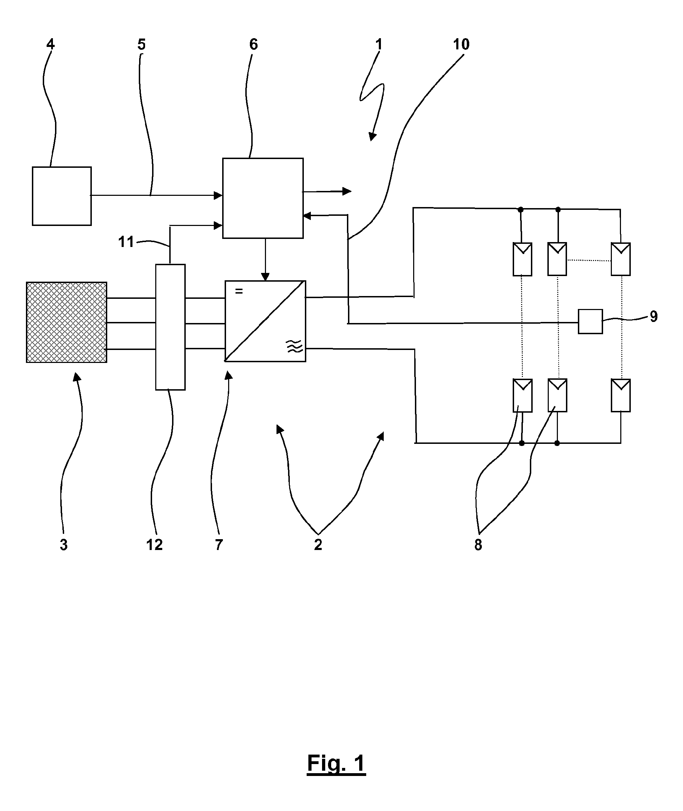

Die in **Fig. 1** skizzierte Vorrichtung 1 dient zum Ermitteln der unter aktuellen Einstrahlungsbedingungen möglichen Einspeiseleitung einer Photovoltaikanlage 2 in ein Wechselstromnetz 3, wenn die Photovoltaikanlage 2 durch den Betreiber 4 des Wechselstromnetzes 3 mittels eines Einspeiseleistungsbegrenzungssignals 5 veranlasst wird, weniger als die aktuell mögliche Einspeiseleistung in das Wechselstromnetz 3 einzuspeisen, um ein Überangebot von elektrischer Energie in dem Wechselstromnetz 3 zu vermeiden. Dabei ist die Vorrichtung 1 teilweise in eine Steuerung 6 der Photovoltaikanlage 2 integriert, die das Einspeiseleistungsbegrenzungssignal 5 empfängt und einen Wechselrichter 7 der Photovoltaikanlage 2 so ansteuert, dass er nur noch eine reduzierte elektrische Leistung von Solarmodulen 8 der Photovoltaikanlage in das Wechselstromnetz 3 einspeist. Das Einspeiseleistungsbegrenzungssignal 5 kann auf unterschiedliche Weise zu der Steuerung 6 gelangen, beispielsweise über einen Empfänger für ein drahtloses Einspeiseleistungsbegrenzungssignal 5 oder über einen Rundsteuersignalempfänger, die hier beide nicht dargestellt sind. Zur Erfassung der möglichen Einspeiseleistung bedient sich die Vorrichtung 1 eines Einstrahlungssensors 9, der zwischen den Solarmodulen 8 der Photovoltaikanlage 2 angeordnet ist und der eine grundsätzlich gleiche Ausrichtung zur Sonne wie die Solarmodule 8 aufweist. Er ist aber aus einen photoaktiven Material aufgebaut, das sich von demjenigen der Solarmodule 8 unterscheidet. Die Steuerung 6 empfängt ein Einstrahlungssignal 10 von dem Einstrahlungssensor 9 und die tatsächliche Einspeiseleistung 11 der Photovoltaikanlage 2 von einem Messgerät 12, das auch als Stromzähler bezeichnet wird. Auf ein separates Messgerät 12 kann verzichtet werden, wenn von dem Wechselrichter 7 oder anderweitig in der Steuerung 6 ausreichend genaue Informationen über die von dem Wechselrichter 7 tatsächlich in das Wechselstromnetz 3 eingespeisten Einspeiseleistung 11 der Photovoltaikanlage 2 vorliegen. In Fig. 1 ist die Photovoltaikanlage mit einem Wechselrichter 7 für einen String mit parallel geschalteten Substrings von Solarmodulen 8 dargestellt. Es können aber auch mehrer Wechselrichter 7 für jeweils einzelne oder mehrere Strings vorgesehen sein. Wenn dabei alle Solarmodule 8 grundsätzlich dieselbe Ausrichtung haben, reicht dennoch ein Einstrahlungssensor 9 aus, dessen Einstrahlungssignal an alle einzelnen Steuerungen 6 verteilt oder zentral für alle Wechselrichter 7 in einer separaten Einheit gemeinsam ausgewertet wird. Sonst ist zumindest je Gruppe von Strings mit gleich ausgerichteten Solarmodulen 8 ein separater Einstrahlungssensor 9 vorzusehen. Auch in diesem Fall kann die Auswertung der verschiedenen Einstrahlungssignale 10 in einer zentralen Einheit erfolgen.

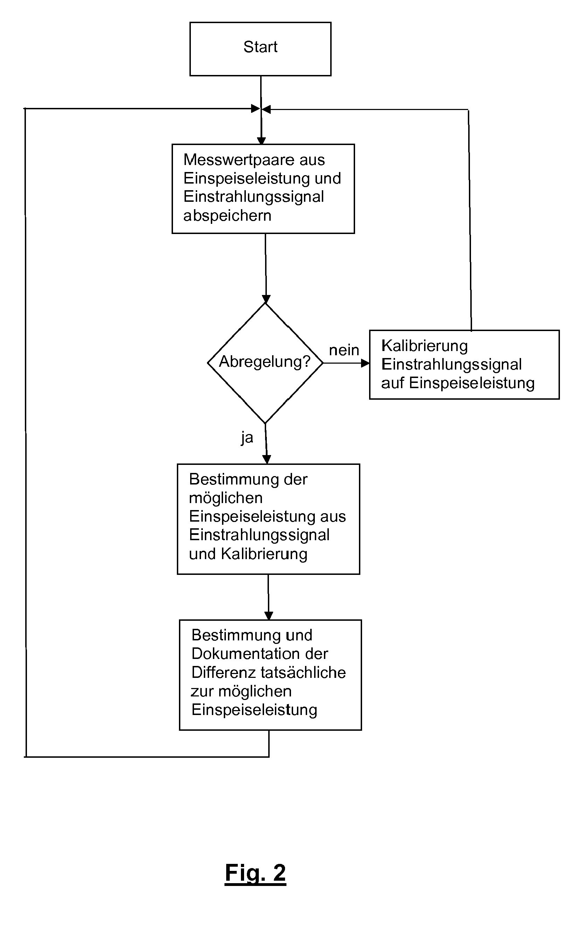

**Fig. 2** skizziert, was mit diesen Messwertpaaren des Einstrahlungssignals 10 und der tatsächlichen Einspeiseleistung 11 in Abhängigkeit davon geschieht, ob die Einspeiseleistung der Photovoltaikanlage 2 aktuell aufgrund des Einspeiseleistungsbegrenzungssignals 5 reduziert ist. Solange eine derartige Abregelung der Photovoltaikanlage 2 nicht erfolgt, werden die entsprechenden Messwertpaare zur Kalibrierung des Einstrahlungssignals auf die Einspeiseleistung der Photovoltaikanlage verwendet. Wenn hingegen eine Abregelung erfolgt, wird diese Kalibrierung verwendet, um aus dem Einstrahlungssignal die mögliche Einspeiseleistung während der Abregelung zu bestimmen und deren Differenz zu der tatsächlichen Einspeiseleistung zu berechnen. Diese Differenz wird dann dokumentiert, um auch für sie eine Vergütung verlangen zu können. Das erfindungsgemäße Verfahren muss nicht wie in Fig. 2 angedeutet während der Erfassung der Messwertpaare durchgeführt werden. Vielmehr reicht es während der Erfassung der Messwertpaare aus, diese abzuspeichern. Ihre Auswertung kann später, beispielsweise nachts erfolgen. Bei einer nachgelagerten Auswertung ist es auch möglich, für die Bestimmung der möglichen Einspeiseleistung aus dem Einstrahlungssignal des Einstrahlungssensors auf eine Kalibrierung zurückzugreifen, die nicht nur auf Messwertpaaren aus früheren Zeiträumen, sondern auch auf Messwertpaaren aus nach der Abregelung liegenden Zeiträumen basiert.

Die erfindungsgemäß im normalen Betrieb der Photovoltaikanlage gewonnenen Messwertpaare können auch mit unter idealen Betriebsbedingungen gemessenen Messwertpaaren verglichen werden, um den Betriebszustand, d. h. das Einhalten optimaler Betriebsbedingungen der Photovoltaikanlage zu überwachen.

### BEZUGSZEICHENLISTE

- 1: Vorrichtung
- 2: Photovoltaikanlage
- 3: Wechselstromnetz
- 4: Netzbetreiber
- 5: Einspeiseleistungsbegrenzungssignal
- 6: Steuerung
- 7: Wechselrichter
- 8: Solarmodul
- 9: Einstrahlungssensor
- 10: Einstrahlungssignal
- 11: Einspeiseleistung
- 12: Messeinrichtung

## Patentansprüche

1. Verfahren zum Ermitteln der unter aktuellen Einstrahlungsbedingungen möglichen Einspeiseleistung einer Photovoltaikanlage (2), wobei ein Einstrahlungssignal (10) eines Einstrahlungssensors (9), unter Verwendung von zugehörigen Messwerten der ohne Leistungsbegrenzung von der Photovoltaikanlage (2) tatsächlich eingespeiste Einspeiseleistung (11) auf die mögliche Einspeiseleistung kalibriert wird, wobei die aktuellen Einstrahlungsbedingungen mit dem Einstrahlungssensor erfasst werden und wobei die mögliche Einspeiseleistung aus dem kalibrierten Einstrahlungssignal (10) bestimmt wird, **dadurch gekennzeichnet, dass** das Einstrahlungssignal (10) immer dann, wenn die Photovoltaikanlage ohne Leistungsbegrenzung einspeist, unter Verwendung der zugehörigen Messwerte der tatsächlich eingespeisten Einspeiseleistung (11) nachkalibriert wird.

2. Verfahren nach Anspruch 1, **dadurch gekennzeichnet, dass** das Einstrahlungssignal (10) für einen Zeitraum, in dem die Photovoltaikanlage (2) aufgrund externer Anweisung (5) nur eine geringere Einspeiseleistung (11) als die unter den aktuellen Einstrahlungsbedingungen mögliche Einspeiseleistung einspeist, unter Verwendung von zugehörigen Messwerten der ohne Leistungsbegrenzung von der Photovoltaikanlage (2) in einem angrenzenden früheren Zeitraum tatsächlich eingespeisten Einspeiseleistung (11) kalibriert wird.

3. Verfahren nach Anspruch 1 oder 2, **dadurch gekennzeichnet, dass** das Einstrahlungssignal (10) für einen Zeitraum, in dem die Photovoltaikanlage (2) aufgrund externer Anweisung (5) nur eine geringere Einspeiseleistung (11) als die unter den aktuellen Einstrahlungsbedingungen mögliche Einspeiseleistung einspeist, unter Verwendung von zugehörigen Messwerten der ohne Leistungsbegrenzung von der Photovoltaikanlage (2) in einem angrenzenden späteren Zeitraum tatsächlich eingespeisten Einspeiseleistung (11) kalibriert wird.

4. Verfahren nach mindestens einem der vorhergehenden Ansprüche, **dadurch gekennzeichnet, dass** das Einstrahlungssignal (10) für unterschiedliche absolute Einstrahlungen und/oder Temperaturen und/oder Tageszeiten und/oder Jahreszeiten kalibriert wird.

5. Verfahren nach mindestens einem der vorhergehenden Ansprüche, **dadurch gekennzeichnet, dass** die Kalibrierung des Einstrahlungssignals (10) in einer Tabelle definiert wird, die fortlaufend aktualisiert wird.

6. Verfahren nach mindestens einem der vorhergehenden Ansprüche, **dadurch gekennzeichnet, dass** der Einstrahlungssensor (9) mit gleicher Orientierung vor oder zwischen Solarmodulen (8) der Photovoltaikanlage (2) angeordnet wird.

7. Verfahren nach mindestens einem der vorhergehenden Ansprüche, **dadurch gekennzeichnet, dass** dann, wenn die Photovoltaikanlage (2) auf externe Anforderung eine geringere Einspeiseleistung (11) als die unter den aktuellen Einstrahlungsbedingungen mögliche Einspeiseleistung einspeist, die unter den aktuellen Einstrahlungsbedingungen möglich gewesene zusätzliche Einspeiseleistung dokumentiert wird.

8. Vorrichtung (1) zum Ermitteln der unter aktuellen Einstrahlungsbedingungen möglichen Einspeiseleistung einer Photovoltaikanlage (2), mit einem ein Einstrahlungssignal (10) abgebenden Einstrahlungssensor (9) und mit einer Auswertungseinheit (6), die das Einstrahlungssignal (10) unter Verwendung von zugehörigen Messwerten der ohne Leistungsbegrenzung von der Photovoltaikanlage tatsächlich eingespeisten Einspeiseleistung (11) auf die mögliche Einspeiseleistung kalibriert und die unter den aktuellen Einstrahlungsbedingungen mögliche Einspeiseleistung aus dem kalibrierten Einstrahlungssignal (10) bestimmt, **dadurch gekennzeichnet, dass** die Auswertungseinheit (6) das Einstrahlungssignal immer dann, wenn die Photovoltaikanlage (2) ohne Leistungsbegrenzung einspeist, unter Verwendung der zugehörigen Messwerte tatsächlich eingespeisten Einspeiseleistung (11) nachkalibriert wird.

9. Vorrichtung (1) nach Anspruch 8, **dadurch gekennzeichnet, dass** die Auswertungseinheit (6) das Einstrahlungssignal (10) für einen Zeitraum, in dem die Photovoltaikanlage (2) aufgrund externer Anweisung (5) nur eine geringere Einspeiseleistung (11) als die unter den aktuellen Einstrahlungsbedingungen mögliche Einspeiseleistung einspeist, unter Verwendung von zugehörigen Messwerten der ohne Leistungsbegrenzung von der Photovoltaikanlage (2) in einem angrenzenden früheren Zeitraum tatsächlich eingespeisten Einspeiseleistung (11) kalibriert.

10. Vorrichtung (1) nach Anspruch 8 oder 9, **dadurch gekennzeichnet, dass** die Auswertungseinheit (6) das Einstrahlungssignal für einen Zeitraum, in dem die Photovoltaikanlage (2) aufgrund externer Anweisung (5) nur eine geringere Einspeiseleistung (11) als die unter den aktuellen Einstrahlungsbedingungen mögliche Einspeiseleistung einspeist, unter Verwendung von zugehörigen Messwerten der ohne Leistungsbegrenzung von der Photovoltaikanlage (2) in einem angrenzenden späteren Zeitraum tatsächlich eingespeisten Einspeiseleistung (11) kalibriert.

11. Vorrichtung (1) nach mindestens einem der vorhergehenden Ansprüche, **dadurch gekennzeichnet, dass** die Auswertungseinheit (6) das Einstrahlungssignal (10) für unterschiedliche absolute Einstrahlungen und/oder Temperaturen und/oder Tageszeiten und/oder Jahreszeiten kalibriert.

12. Vorrichtung (1) nach mindestens einem der vorhergehenden Ansprüche, **dadurch gekennzeichnet, dass** die Auswertungseinheit (6) die Kalibrierung des Einstrahlungssignals (10) in einer Tabelle definiert, die fortlaufend aktualisiert wird.

13. Vorrichtung (1) nach mindestens einem der vorhergehenden Ansprüche, **dadurch gekennzeichnet, dass** der Einstrahlungssensor (9) auf einem anderen Material als dem Material von Solarmodulen (8) der Photovoltaikanlage (2) basiert.

14. Vorrichtung (1) nach mindestens einem der vorhergehenden Ansprüche, **dadurch gekennzeichnet, dass** der Einstrahlungssensor (9) mit gleicher Orientierung vor oder zwischen Solarmodulen (8) der Photovoltaikanlage (2) angeordnet ist.

15. Vorrichtung (1) nach mindestens einem der vorhergehenden Ansprüche, **dadurch gekennzeichnet, dass** die Auswertungseinheit (6) dann, wenn die Photovoltaikanlage (2) auf externe Anforderung (5) eine geringere Einspeiseleistung (11) als die unter den aktuellen Einstrahlungsbedingungen mögliche Einspeiseleistung einspeist, die unter den aktuellen Einstrahlungsbedingungen möglich gewesene zusätzliche Einspeiseleistung dokumentiert.
